# EUROPEAN PATENT SPECIFICATION

(11) **EP 3 499 016 B1**
(45) Date of publication and mention of the grant of the patent: **03.07.2024**
(21) Application number: 17290162.1
(22) Date of filing: 14.12.2017
(51) Int. Cl.: F02M 35/10, F02B 27/02, F02B 27/00

(54) **AIR DUCT ARRANGEMENT AND INTERNAL COMBUSTION ENGINE**
LUFTKANALANORDNUNG UND VERBRENNUNGSMOTOR
AGENCEMENT DE CONDUITE D'AIR POUR MOTEUR À COMBUSTION INTERNE

(43) Date of publication of application: 19.06.2019
(73) Proprietor: MoldTecs-01-2022 GmbH, 38667 Bad Harzburg (DE)
(72) Inventor: Raimbault, Vincent, 53230 Cosmes (FR); Migaud, Jérôme, 35500 Vitré (FR); Günther, Torsten, 71696 Möglingen (DE); Chalet, David, 44240 La Chapelle-sur-Erdre (FR)
(74) Representative: STT Sozietät Thews & Thews

(56) References cited:
- WO-A1-2015/027335
- DE-A1- 2 752 498
- DE-A1- 2 913 264
- FR-A1- 2 430 515

## Description

### Technical Field

The invention relates to an air duct arrangement, in particular a charge air duct for a turbocharged internal combustion engine, and an internal combustion engine including an air duct arrangement.

### Prior Art

For turbocharged internal combustion engines geometry, in particular diameter and length, of charge air ducts (also called charge air delivery ducts) is tuned to take benefits from pressure waves for improving the air filling into the engine cylinders, and thus performance.

In the operation of internal combustion engines, use is conventionally made of air intake systems which provide ram or resonance pipe charging or a combination of these two charging types. In the case of a supercharged or turbocharged internal combustion engine, the compression of the combustion air which is sucked in results in an increase in the air temperature. Further charging is avoided and a charge-air cooler for cooling the charge air is therefore positioned downstream of a compressor. This is intended to minimize the risk of a knocking engine. A further reduction in the charge-air temperature by means of a larger charge-air cooler is generally not possible for structural reasons. Accordingly, to increase the efficiency of the charge-air cooler, expansion devices are provided downstream thereof in order to further reduce a combustion air temperature.

DE 27 52 498 A1 shows an intake system of a turbo charged combustion engine, comprising resonator chambers which are connected to the inlets of the cylinders of individual groups of cylinders of the engine, a resonant pipe connected to each respective resonator chamber and a balancing chamber, to which the resonant pipes and an intake air pipe from an exhaust-driven turbo compressor are connected, the resonator chambers and the resonant pipes being tuned to produce resonance within a specific r.p.m. range, wherein that the balancing chamber is a charge air cooler aligned with a radiator for the engine coolant.

From WO 2015/027335 A1 an improved exhaust gas recirculation (EGR) system is known which comprises combustion chambers divided into a first portion and a second portion. An intake valve and an exhaust valve are associated with each combustion chamber. An intake manifold is in fluid communication with the combustion chambers through respective intake valves. A first exhaust manifold is in fluid communication with said first portion of combustion chambers through respective exhaust valves. A second exhaust manifold is in fluid communication with said second portion of combustion chambers through respective exhaust valves. An EGR exhaust valve is associated with each combustion chamber in said second portion. An EGR manifold is in fluid communication with each combustion chamber in said second portion through respective EGR exhaust valves and with said at least one intake manifold.

In US 8, 720,402 B2 an internal combustion engine is proposed, being characterized in that a distributor pipe length is dimensioned as a function of an equivalent distributor pipe diameter such that it is possible for a reduction in the charge pressure to be obtained within the air intake system of the internal combustion engine by means of an expansion, with the charge-air expansion taking place partially in the plenum, in the respective intake pipe and/or within the distributor pipe. Thus, it is possible to obtain a continuous, but not imperatively uniform, expansion between the inlet of the combustion air into the distributor pipe and the outlet out of the intake pipe.

With the design of the air intake system shown in the US 8, 720,402 B2, by means of the expansion which is obtained, effective cooling of the charge air within the air intake system is provided

### Disclosure of the Invention

It is an object of the invention to provide an air duct arrangement, in particular a charge air duct for a turbocharged internal combustion engine exhibiting improved efficiency of the internal air flow.

Another object of the invention is to provide an internal combustion engine with such an air duct arrangement.

The objects are achieved according to one aspect of the invention by an air duct arrangement according to claim 1.

The other claims, the description and the drawings describe advantageous embodiments of the invention.

Charge air within the meaning of the invention shall be understood as compressed air, compressed by an exhaust-gas turbocharger or any other kind of charger.

According to a first aspect of the invention, an air duct arrangement is proposed, in particular a charge air duct for a turbocharged internal combustion engine, the air duct arrangement comprising a cooler and at least two inlet air ducts of an air intake manifold of an internal combustion engine, wherein at least a first one of the inlet air ducts is arranged between an outlet of the cooler and at least one runner of the air intake manifold, where the runner is connected to an intake valve of a cylinder of the internal combustion engine. The other one of the inlet air ducts is arranged between the first one of the inlet air ducts and at least one runner connected to an intake valve of at least one of the further cylinders. Hereby an air flow length of at least one of the inlet air ducts is provided such that a charge air pressure wave effected by closing the intake valve of one of the cylinders propagates through the inlet air ducts causing an underpressure at the intake valve of the one further cylinder.

Charge air may be fed through the cooler to the cylinders of the combustion engine. The one or two intake valves of a first cylinder will close due to the firing order of the combustion engine. When closing the valve the air flow in the inlet air duct is stopped, charge air is reflected at the valve and thus an air wave may propagate back in the inlet air duct to the second inlet air duct, connected to the first inlet air duct and fed to a further cylinder. Thus at an intake valve of the second cylinder an underpressure caused by the propagation wave may be observed resulting in a decrease of the charge air temperature when feeding this second cylinder. The air flow length of the inlet air ducts may advantageously be provided such that the propagation wave arrives with an appropriate phase at the intake valve of the second cylinder, in particular with a pressure minimum. A much different air flow length for the two inlet air ducts is provided.

Advantageously due to the invention it may be possible to reduce the load in the cylinder of an internal combustion engine, particularly in a gasoline engine, and thus to reduce the combustion temperature and decrease the knocking tendency. At the end it will give the chance to reduce NOₓ emission and keep the exhaust gas temperature under the component limit, particularly the exhaust manifold and turbine.

According to the invention the design of the air duct arrangement as part of an air intake system between an intake valve and the charge air cooler is layout to ensure that an overpressure created at the closing of one intake valve will effect an air wave propagating to cause an underpressure at another cylinder. This will create a kind of expansion of the charge air just at the closing time of the intake valve in order to decrease the temperature in the cylinder.

Further, a reduction of exhaust temperature due to an early combustion and the possibility to reduce enrichment of the combustion gases may advantageously be achieved.

The invention can be applied to the current design of a four-cylinder head of an internal combustion engine while, depending of the firing order of the cylinders, connecting the two outer runners and the two inner runners, feeding the combustion chambers of the cylinders. The inlet air duct as a connection pipe to the charge air cooler can be placed in different positions in the air duct arrangement. The length of the runners between the valves with firing order first cylinder - third cylinder and second cylinder - fourth cylinder in the row of the four-cylinder head will define the engine speed by the efficiency of the air duct arrangement.

Advantageously the invention can also be applied for 5, 6, 8, 10 or 12 cylinder engine as well.

Advantageously a charge pressure of the combustion air may be reduced as the combustion air travels as a propagation wave caused by the closing of one valve to an inlet into the combustion chamber of another cylinder of the internal combustion engine during an intake of the combustion air through the air duct arrangement.

With the design of the air intake system according to embodiments of the invention, by means of the partial expansion by the propagation wave which is obtained, effective cooling of the charge air within the air duct arrangement is provided without using additional moving components. In this way, a cost-effective and efficient air duct arrangement for supercharged internal combustion engines may be provided, with the expansion air duct arrangement according to aspects of the invention being suitable both for supercharged spark-ignition engines and also for diesel engines.

In particular, by means of the invention, the tendency of a supercharged spark-ignition engine towards knocking combustion may be minimized. It is thereby possible for the displacement of the ignition angle in the direction of the optimum value to be obtained even at high rotational speeds, since a reduction in the combustion mixture temperature is generated. This is because, by means of the air duct arrangement according to embodiments of the invention, a gas-dynamic compression downstream of the charge-air cooler may be prevented and, in addition, a partial expansion through propagation waves of the charge air may be obtained within the air duct arrangement causing a reduction in temperature of the combustion air.

In this way, an optimized partial expansion of the compressed combustion air may take place within the air duct arrangement, such that the combustion air enters at a considerably lower temperature from the air duct arrangement into the inlet duct in the cylinder head. By means of the dimensioning according to aspects of the invention, the air duct arrangement completely reverses the known resonance charging effect, in particular at high engine rotational speeds. Instead of a compression, a partial expansion through propagation waves of the combustion air may be obtained, and said combustion air may be cooled further. The fuel/air mixture in the combustion chamber may therefore be at a lower temperature, so that the ignition time of the internal combustion engine may be set optimally in terms of performance. It may therefore be possible to obtain an improvement in engine efficiency and, at the same time, a higher engine power together with favorable fuel consumption, in particular at high loads and rotational speeds.

In this way, it may be possible in the internal combustion engine according to aspects of the invention to obtain an optimization of the ignition time and therefore a further improvement in efficiency.

Advantageously, the embodiments of the invention are exemplified for four-cylinder engines, yet may also be favorable for six or eight-cylinder engines, as well as for three-cylinder engines. For six- or eight-cylinder engines, an air flow length of the inlet air ducts may be shorter than for four-cylinder engines, whereas for three-cylinder engines the air flow length may be provided much longer, particularly around three times longer than for four-cylinder engines.

In a favorable embodiment of the invention the inlet air ducts may be manufactured as plastics parts.

According to an advantageous embodiment at least two runners may branch off one of the inlet air ducts. Thus two or more cylinders may advantageously be fed with combustion air with the same inlet air duct.

According to an advantageous embodiment runners feeding the intake valves of two adjacent cylinders may branch off the same air duct. By this way a particularly advantageous arrangement of the air duct arrangement enables to feed two adjacent cylinders which may it possible to realize a favorable firing order of the first cylinder - third cylinder and fourth cylinder - second cylinder.

According to an advantageous embodiment runners feeding the intake valves of two cylinders separated by at least one further cylinder may branch off the same air duct. This advantageous arrangement of the air duct arrangement further enables to feed two adjacent cylinders which may it possible to realize a favorable firing order of the first cylinder - third cylinder and fourth cylinder - second cylinder.

According to an advantageous embodiment two runners may be connected directly upstream the intake valves. In this arrangement the two runners may be integrated into the cylinder head which proves favorable due to less space requirements.

According to an advantageous embodiment the inlet air ducts may be provided with a uniform diameter along their elongation. A uniform diameter without variation of the inlet air ducts enables a favorable propagation of the charge air wave in the inlet air duct caused by closing of the intake valve of a cylinder.

According to an advantageous embodiment at least one cylinder may be provided with two intake valves, which are fed by the same runner. The two intake valves may work simultaneously in a favorable mode of operation. Internal combustion engines with two intake valves per cylinder are favored because of enabling more flexibility in injection of fuel and higher efficiency of the combustion process.

According to an advantageous embodiment at least one joint air duct may be arranged between the outlet of the cooler and the inlet air ducts. Thus it is possible to feed the inlet air duct by one joint air duct enabling higher flexibility of duct arrangement of the air intake system.

According to an advantageous embodiment the inlet air ducts may be connected via a T-shaped connection part to the cooler. Due to a particularly favorable design of the air duct arrangement two inlet air ducts may be fed by a joint T-shaped connection part. Thus propagation of the charge air wave from one inlet air duct to another inlet air duct may be possible in an advantageous way.

According to another aspect of the invention an internal combustion engine is proposed, at least comprising a plurality of cylinders, a combustion chamber which is arranged in each cylinder, and an air duct arrangement comprising at least a compressor for feeding combustion air, and an air duct arrangement, comprising a cooler, and at least two inlet air ducts of an air intake manifold of an internal combustion engine. At least a first one of the inlet air ducts is arranged between an outlet of the cooler and at least one runner of the air intake manifold, where the runner is connected to an intake valve of a cylinder of the internal combustion engine. The other one of the inlet air ducts is arranged between the first one of the inlet air ducts and at least one runner connected to an intake valve of at least one of the further cylinders. Hereby an air flow length of at least one of the inlet air ducts is provided such that a charge air pressure wave effected by closing the intake valve of one of the cylinders propagates through the inlet air ducts causing an underpressure at the intake valve of the one further cylinder.

According to an advantageous embodiment at least two runners may branch off one of the inlet air ducts. Thus two or more cylinders may advantageously be fed with combustion air with the same inlet air duct.

According to an advantageous embodiment runners feeding the intake valves of two adjacent cylinders may branch off the same air duct. By this way a particularly advantageous arrangement of the air duct arrangement enables to feed two adjacent cylinders which may it possible to realize a favorable firing order of the first cylinder - third cylinder and fourth cylinder - second cylinder.

According to an advantageous embodiment runners feeding the intake valves of two cylinders separated by at least one further cylinder may branch off the same air duct. This advantageous arrangement of the air duct arrangement further enables to feed two adjacent cylinders which may it possible to realize a favorable firing order of the first cylinder - third cylinder and fourth cylinder - second cylinder.

### Brief Description of the Drawings

The present invention together with the above-mentioned and other objects and advantages may best be understood from the following detailed description of the embodiments, but not restricted to the embodiments, wherein is shown in:
- Figure 1: a top view of an air duct arrangement, attached to a four-cylinder internal combustion engine, according to an example embodiment of the invention;
- Figure 2: an isometric view of the air duct arrangement of Figure 1;
- Figure 3: another isometric view of the air duct arrangement of Figure 1;
- Figure 4: an isometric view of an air duct arrangement, attached to a four-cylinder internal combustion engine, according to a further example embodiment of the invention;
- Figure 5: another isometric view of the air duct arrangement of Figure 4;
- Figure 6: an isometric view of an air duct arrangement, attached to a four-cylinder internal combustion engine, according to another example not part of the invention;
- Figure 7: another isometric view of the air duct arrangement of Figure 6;
- Figure 8: a top view of an air duct arrangement, attached to a four-cylinder internal combustion engine, according to a further example embodiment of the invention;
- Figure 9: an isometric view of the air duct arrangement of Figure 8;
- Figure 10: another isometric view of the air duct arrangement of Figure 8; and
- Figure 11: a further isometric view of the air duct arrangement of Figure 8.

### Detailed Description of the Drawings

In the drawings, like elements are referred to with equal reference numbers. The drawings are merely schematic representations, not intended to portray specific parameters of the invention. Moreover, the drawings are intended to depict only typical embodiments of the invention and therefore should not be considered as limiting the scope of the invention.

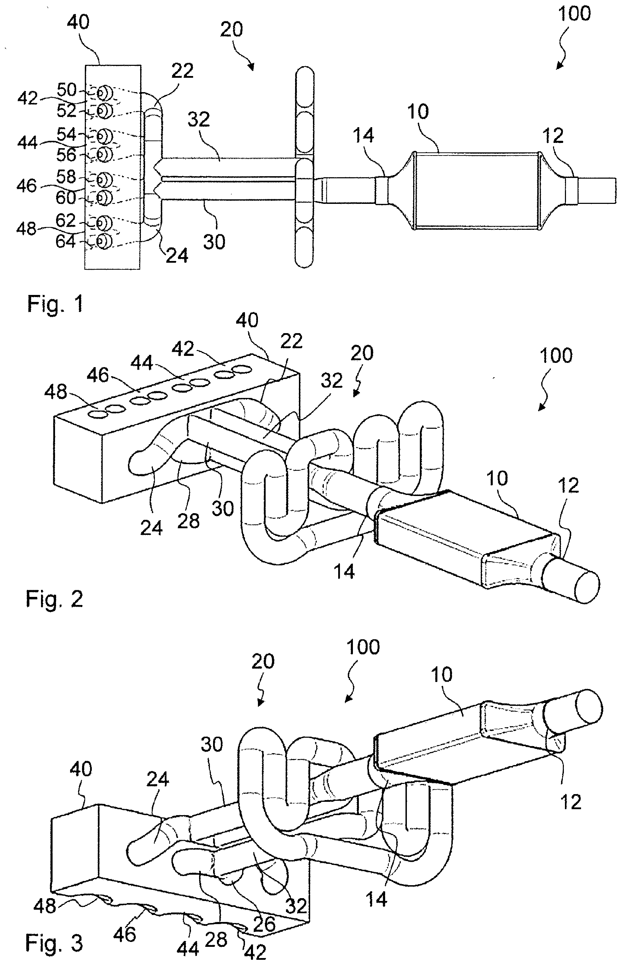

In Figures 1 to 3 an air duct arrangement 100, attached to a four-cylinder internal combustion engine 40, according to a first example embodiment of the invention, is depicted. Figure 1 shows a top view, Figure 2 an isometric view and Figure 3 a further isometric view of the air duct arrangement 100.

The air duct arrangement 100, which is in particular suited as a charge air duct for a turbocharged internal combustion engine 40, comprises a cooler 10, and two inlet air ducts 30, 32 of an air intake manifold 20 of an internal combustion engine 40. A first one of the inlet air ducts 30 is arranged between an outlet 14 of the cooler 10 and the runners 22, 24 of the air intake manifold 20. The runners 22, 24 are connected to an intake valve 50, 52, 62, 64 of a cylinder 42, 48 of the internal combustion engine 40.

The input 12 of the cooler 10 may be connected to the output of a turbocharger, not shown in Figures 1 to 11.

The internal combustion engine 40 comprises a plurality of cylinders 42, 44, 46, 48, a combustion chamber which is arranged in each cylinder 42, 44, 46, 48, and an air intake system comprising at least a compressor for feeding combustion air, and an air duct arrangement 100, as shown in Figures 1 to 11. The internal combustion engine 40 is only depicted as a schematic part with the cylinder head, exhibiting four cylinders 42, 44, 46, 48 in a single row.

The second inlet air duct 32 is arranged between the first inlet air duct 30 and the runners 26, 28 connected to an intake valve 54, 56, 58, 60 of the further cylinders 44, 46. Hereby an air flow length of at least one of the inlet air ducts 30, 32 is provided such that a charge air pressure wave effected by closing the intake valve 50, 52, 54, 56, 58, 60, 62, 64 of one of the cylinders 42, 44, 46, 48 propagates through the inlet air ducts 30, 32 causing an underpressure at the intake valve 50, 52, 54, 56, 58, 60, 62, 64 of the one further cylinder 42, 44, 46, 48.

The two runners 22, 24 branch off the inlet air duct 30, whereas the two runners 26, 28 branch off the inlet air duct 32. Runners 26, 28 are feeding the intake valves 54, 56, 58, 60 of the two adjacent cylinders 44, 46. Runners 22, 24 are feeding the intake valves 50, 52, 62, 64 of the two cylinders 42, 48 separated by the two further cylinders 44, 46.

The inlet air ducts 30, 32 are provided with a uniform diameter along their elongation for a favorable charge air wave propagation.

The cylinders 42, 44, 46, 48 are provided with each with two intake valves 50, 52, 54, 56, 58, 60, 62, 64, where each pair of valves 50, 52, 54, 56, 58, 60, 62, 64 of one cylinder 42, 44, 46, 48 is fed by the same runner 22, 24, 26, 28.

A specific feature of the air duct arrangement 100, shown in Figures 1 to 3, is that the second inlet air duct 32 exhibits a much longer air flow length than the first inlet air duct 30, causing a favorable propagation wave by closing the valves 50, 52, 54, 56, 58, 60, 62, 64 of at least one of the cylinders 42, 44, 46, 48, resulting in an underpressure at the intake valve 50, 52, 54, 56, 58, 60, 62, 64 of the one further cylinder 42, 44, 46, 48. By this underpressure an advantageous reduction of the input temperature of the charge air may be achieved.

The internal combustion engine 40 described here operates on the four-stroke principle, with the present invention likewise being suitable for two-stroke internal combustion engine 40s.

Besides, the embodiments of the invention as shown in Figures 1 to 11 are exemplified for four-cylinder engines, yet may also be advantageous for six- or eight-cylinder engines, as well as for three-cylinder engines.

Accordingly, a further reduction in the charge-air temperature is brought about by means of the generated partial expansion by the propagation wave, such that a lower charge-air temperature than the conventional temperatures is obtained at the inlet of the combustion chamber while maintaining the desired charge pressure level. The relatively high air throughput in the combustion chamber is therefore maintained, and at the same time, a power increase is obtained as a result of the displacement of the knock limit of the internal combustion engine 40.

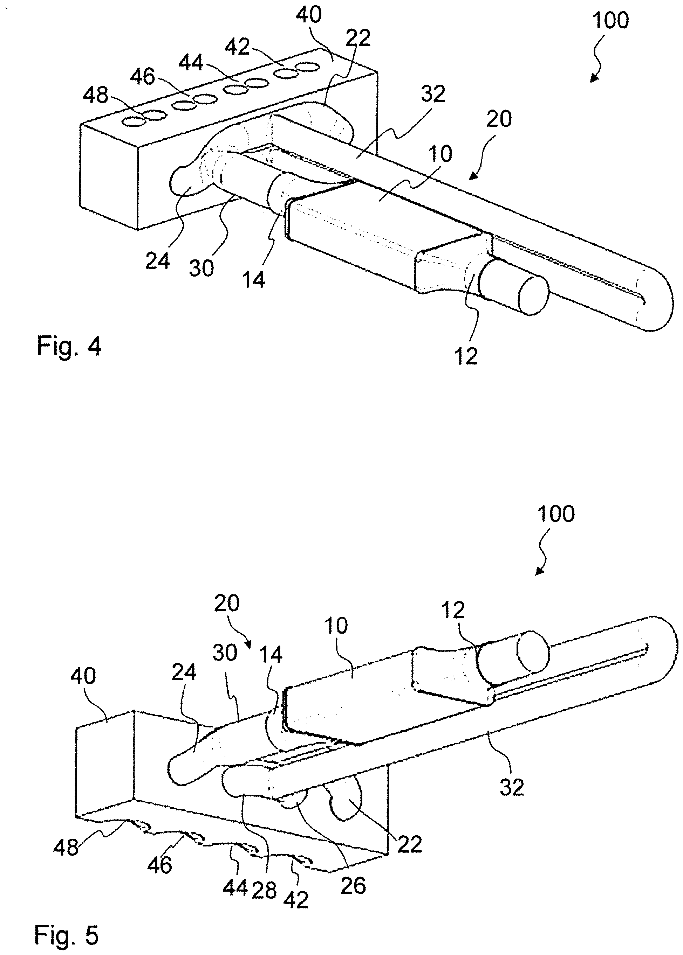

Figures 4 and 5 depict an air duct arrangement 100, attached to a four cylinder internal combustion engine 40, according to a further example embodiment of the invention in two isometric views.

In this embodiment the first inlet air duct 30 is relatively short, connected to the runner 24, feeding cylinder 48. The runner 24 is further connected to the runner 22, feeding cylinder 42. The second inlet air duct 32, which exhibits a much longer air flow length than the inlet air duct 30, is branching off the connected runners 22, 24 and extends to the connected runners 26, 28, feeding cylinders 44, 46.

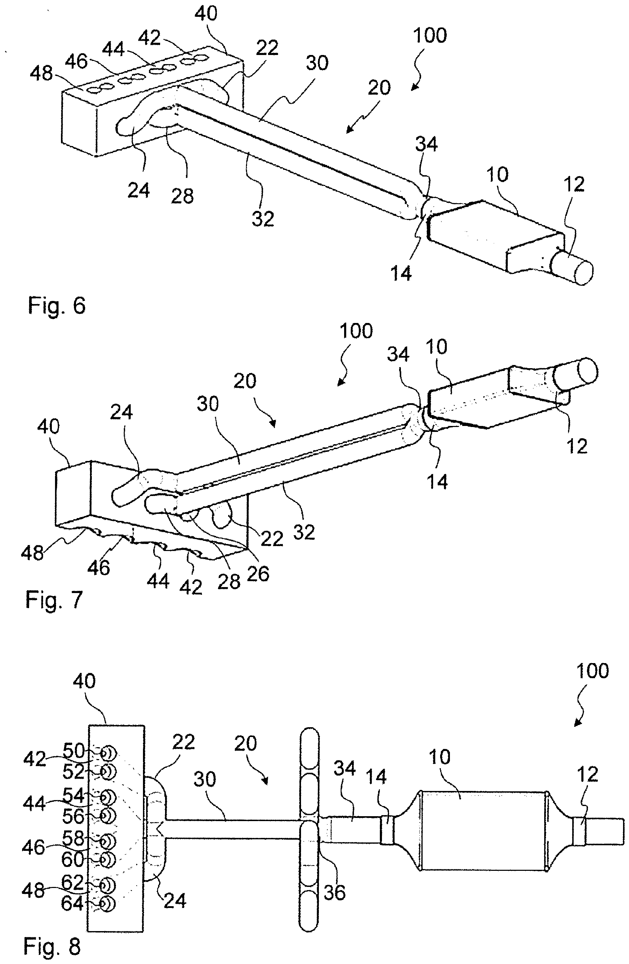

Figures 6 and 7 depict an air duct arrangement 100, attached to a four cylinder internal combustion engine 40, according to another example not part of the invention in two isometric views.

In this embodiment a joint air duct 34 is arranged between the outlet 14 of the cooler 10 and the inlet air ducts 30, 32, feeding both inlet air ducts 30, 32 at the same time. Both inlet air ducts 30, 32 exhibit the same length. The first inlet air duct 30 is connected to the runners 22, 24, feeding cylinders 42, 48, whereas the second inlet air duct 32 is connected to the runners 26, 28, feeding cylinders 44, 46. The different air flow length of the inlet air ducts resulting in a favorable propagation wave upon closing the intake valve of one of the cylinders 42, 44, 46, 48 is caused by the different length of the runners 22, 24 and 26, 28, respectively.

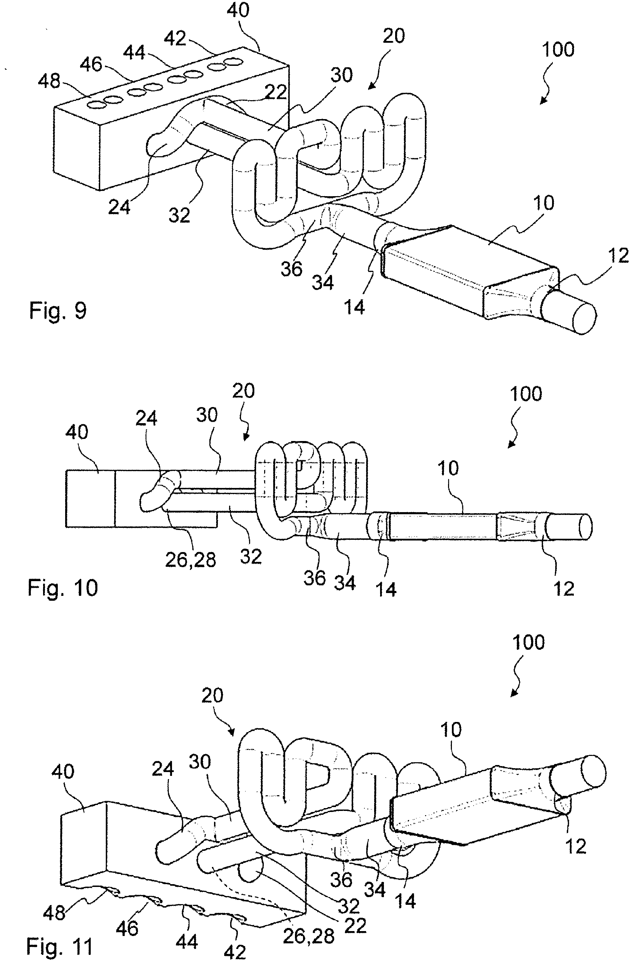

In Figures 8 to 11 an air duct arrangement 100, attached to a four cylinder internal combustion engine 40, according to a further example embodiment of the invention is shown. Figure 8 depicts a top view, Figures 9, 10 and 11 isometric views of the air duct arrangement 100.

In this embodiment the inlet air ducts 30, 32 are connected via a T-shaped connection part 36 to the cooler 10. The first inlet air duct 30 is connected to the runners 22, 24, whereas the second inlet air duct 32 is connected to the runners 26, 28, but in this embodiment the two runners 26, 28 are connected directly upstream the intake valves 54, 56, 58, 60, inside the cylinder head.

The two inlet air ducts 30, 32 exhibit different air flow lengths. They are arranged in winding configurations between the cooler 10 and the engine 40. Thus a relatively compact air duct arrangement 100 may be achieved, resulting in a compact design of the internal combustion engine 40, which may be favorably integrated in the engine compartment of a vehicle.

## Claims

1. An air duct arrangement (100), in particular a charge air duct for a turbocharged internal combustion engine (40), comprising a cooler (10), and at least two inlet air ducts (30, 32) of an air intake manifold (20) of an internal combustion engine (40), wherein
- at least a first one of the inlet air ducts (30, 32) is arranged between an outlet (14) of the cooler (10) and at least one runner (22, 24, 26, 28) of the air intake manifold (20), where the runner (22, 24, 26, 28) is connected to an intake valve (50, 52, 54, 56, 58, 60, 62, 64) of a cylinder (42, 44, 46, 48) of the internal combustion engine (40),
- the other one of the inlet air ducts (30, 32) is arranged between the first one of the inlet air ducts (30, 32) and at least one runner (22, 24, 26, 28) connected to an intake valve (50, 52, 54, 56, 58, 60, 62, 64) of at least one of the further cylinders (42, 44, 46, 48),
**characterized in that** an air flow length of at least one of the inlet air ducts (30, 32) is provided such that a charge air pressure wave effected by closing the intake valve (50, 52, 54, 56, 58, 60, 62, 64) of one of the cylinders (42, 44, 46, 48) propagates through the inlet air ducts (30, 32) causing an underpressure at the intake valve (50, 52, 54, 56, 58, 60, 62, 64) of the one further cylinder (42, 44, 46, 48), wherein the air flow lengths of the inlet air ducts (30, 32) provide that the propagation wave arrives with an appropriate phase at the intake valve of the second cylinder with a pressure minimum, wherein a much different air flow length for the two inlet air ducts is provided.

2. The air duct arrangement according to claim 1, wherein at least two runners (22, 24, 26, 28) branch off one of the inlet air ducts (30, 32).

3. The air duct arrangement according to claim 1 or 2, wherein runners (26, 28) feeding the intake valves (54, 56, 58, 60) of two adjacent cylinders (44, 46) branch off the same air duct (30, 32).

4. The air duct arrangement according to any one of the preceding claims, wherein runners (22, 24) feeding the intake valves (50, 52, 62, 64) of two cylinders (42, 48) separated by at least one further cylinder (44, 46) branch off the same air duct (30, 32).

5. The air duct arrangement according to claims 3 or 4, wherein two runners (26, 28) are connected directly upstream the intake valves (54, 56, 58, 60).

6. The air duct arrangement according to any one of the preceding claims, wherein the inlet air ducts (30, 32) are provided with a uniform diameter along their elongation.

7. The air duct arrangement according to any one of the preceding claims, wherein at least one cylinder (42, 44, 46, 48) is provided with two intake valves (50, 52, 54, 56, 58, 60, 62, 64), which are fed by the same runner (22, 24, 26, 28).

8. The air duct arrangement according to any one of the preceding claims, wherein at least one joint air duct (34) is arranged between the outlet (14) of the cooler (10) and the inlet air ducts (30, 32).

9. The air duct arrangement according to any one of the preceding claims, wherein the inlet air ducts (30, 32) are connected via a T-shaped connection part (36) to the cooler (10).

10. An internal combustion engine (40) at least comprising:
- a plurality of cylinders (42, 44, 46, 48),
- a combustion chamber which is arranged in each cylinder (42, 44, 46, 48), an air intake system comprising at least a compressor for feeding combustion air, an air duct arrangement (100) according to any one of the preceding claims.

11. The internal combustion engine according to claim 10, wherein at least two runners (22, 24, 26, 28) branch off one of the inlet air ducts (30, 32).

12. The internal combustion engine according to claim 10 or 11, wherein runners (26, 28) feeding the intake valves (54, 56, 58, 60) of two adjacent cylinders (44, 46) branch off the same air duct (30, 32).

13. The internal combustion engine according to any one of the claims 10 to 12, wherein runners (22, 24) feeding the intake valves (50, 52, 62, 64) of two cylinders (42, 48) separated by at least one further cylinder (44, 46) branch off the same air duct (30, 32).

## Patentansprüche

1. Luftkanalanordnung (100), insbesondere Ladeluftkanal für einen turbogeladenen Verbrennungsmotor (40), die einen Kühler (10) und mindestens zwei Einlassluftkanäle (30, 32) eines Luftansaugkrümmers (20) eines Verbrennungsmotors (40) umfasst, wobei
- mindestens ein erster der Einlassluftkanäle (30, 32) zwischen einem Auslass (14) des Kühlers (10) und mindestens einem Verteilerrohr (22, 24, 26, 28) des Luftansaugkrümmers (20) angeordnet ist, wobei das Verteilerrohr (22, 24, 26, 28) mit einem Einlassventil (50, 52, 54, 56, 58, 60, 62, 64) eines Zylinders (42, 44, 46, 48) des Verbrennungsmotors (40) verbunden ist,
- der andere der Einlassluftkanäle (30, 32) zwischen dem ersten der Einlassluftkanäle (30, 32) und mindestens einem Verteilerrohr (22, 24, 26, 28), das mit einem Einlassventil (50, 52, 54, 56, 58, 60, 62, 64) von mindestens einem der weiteren Zylinder (42, 44, 46, 48) verbunden ist, angeordnet ist,
**dadurch gekennzeichnet, dass** eine Luftstromlänge von mindestens einem der Einlassluftkanäle (30, 32) so ausgebildet ist, dass sich eine durch Schließen des Einlassventils (50, 52, 54, 56, 58, 60, 62, 64) eines der Zylinder (42, 44, 46, 48) bewirkte Ladeluftdruckwelle durch die Einlassluftkanäle (30, 32) hindurch ausbreitet und einen Unterdruck an dem Einlassventil (50, 52, 54, 56, 58, 60, 62, 64) des einen weiteren Zylinders (42, 44, 46, 48) herbeiführt, wobei die Luftstromlängen der Einlassluftkanäle (30, 32) dafür sorgen, dass die Ausbreitungswelle mit einer entsprechenden Phase an dem Einlassventil des zweiten Zylinders mit einem Druckminimum eintrifft, wobei die beiden Einlassluftkanäle eine deutlich voneinander verschiedene Luftstromlänge aufweisen.

2. Luftkanalanordnung nach Anspruch 1, wobei mindestens zwei Verteilerrohre (22, 24, 26, 28) von einem der Einlassluftkanäle (30, 32) abzweigen.

3. Luftkanalanordnung nach Anspruch 1 oder 2, wobei Verteilerrohre (26, 28), die die Einlassventile (54, 56, 58, 60) von zwei benachbarten Zylindern (44, 46) versorgen, von demselben Luftkanal (30, 32) abzweigen.

4. Luftkanalanordnung nach einem der vorangehenden Ansprüche, wobei Verteilerrohre (22, 24), die die Einlassventile (50, 52, 62, 64) von zwei durch mindestens einen weiteren Zylinder (44, 46) getrennten Zylindern (42, 48) versorgen, von demselben Luftkanal (30, 32) abzweigen.

5. Luftkanalanordnung nach Anspruch 3 oder 4, wobei zwei Verteilerrohre (26, 28) direkt stromaufwärts der Einlassventile (54, 56, 58, 60) verbunden sind.

6. Luftkanalanordnung nach einem der vorangehenden Ansprüche, wobei die Einlassluftkanäle (30, 32) entlang ihrer Längserstreckung mit einem einheitlichen Durchmesser ausgebildet sind.

7. Luftkanalanordnung nach einem der vorangehenden Ansprüche, wobei mindestens ein Zylinder (42, 44, 46, 48) mit zwei Einlassventilen (50, 52, 54, 56, 58, 60, 62, 64) versehen ist, die durch dasselbe Verteilerrohr (22, 24, 26, 28) versorgt werden.

8. Luftkanalanordnung nach einem der vorangehenden Ansprüche, wobei mindestens ein gemeinsamer Luftkanal (34) zwischen dem Auslass (14) des Kühlers (10) und den Einlassluftkanälen (30, 32) angeordnet ist.

9. Luftkanalanordnung nach einem der vorangehenden Ansprüche, wobei die Einlassluftkanäle (30, 32) über einen T-förmigen Verbindungsteil (36) mit dem Kühler (10) verbunden sind.

10. Verbrennungsmotor (40), der mindestens umfasst:
- mehrere Zylinder (42, 44, 46, 48),
- einen Brennraum, der in jedem Zylinder (42, 44, 46, 48) angeordnet ist, ein Luftansaugsystem, das mindestens einen Kompressor zum Zuführen von Verbrennungsluft umfasst, und eine Luftkanalanordnung (100) nach einem der vorangehenden Ansprüche.

11. Verbrennungsmotor nach Anspruch 10, wobei mindestens zwei Verteilerrohre (22, 24, 26, 28) von einem der Einlassluftkanäle (30, 32) abzweigen.

12. Verbrennungsmotor nach Anspruch 10 oder 11, wobei Verteilerrohre (26, 28), die die Einlassventile (54, 56, 58, 60) von zwei benachbarten Zylindern (44, 46) versorgen, von demselben Luftkanal (30, 32) abzweigen.

13. Verbrennungsmotor nach einem der Ansprüche 10 bis 12, wobei Verteilerrohre (22, 24), die die Einlassventile (50, 52, 62, 64) von zwei durch mindestens einen weiteren Zylinder (44, 46) getrennten Zylindern (42, 48) versorgen, von demselben Luftkanal (30, 32) abzweigen.

## Revendications

1. Agencement de conduite d'air (100), en particulier conduite d'air de charge pour moteur à combustion interne turbocompressé (40), comprenant un refroidisseur (10), et au moins deux conduites d'entrée d'air (30, 32) d'un collecteur d'admission d'air (20) d'un moteur à combustion interne (40), dans lequel
- au moins une première des conduites d'air d'admission (30, 32) est disposée entre une sortie (14) du refroidisseur (10) et au moins une glissière (22, 24, 26, 28) du collecteur d'admission d'air (20), la glissière (22, 24, 26, 28) étant connectée à une vanne d'admission (50, 52, 54, 56, 58, 60, 62, 64) d'un cylindre (42, 44, 46, 48) du moteur à combustion interne (40),
- l'autre des conduites d'air d'admission (30, 32) est disposée entre la première des conduites d'air d'admission (30, 32) et au moins une glissière (22, 24, 26, 28) connectée à une vanne d'admission (50, 52, 54, 56, 58, 60, 62, 64) d'au moins un des autres cylindres (42, 44, 46, 48),
**caractérisé en ce qu'**une longueur de flux d'air d'au moins une des conduites d'air d'admission (30, 32) est prévue de manière à ce qu'une onde de pression d'air de charge produite en fermant la vanne d'admission (50, 52, 54, 56, 58, 60, 62, 64) d'un des cylindres (42, 44, 46, 48) se propage à travers les conduites d'air d'admission (30, 32) en provoquant une sous-pression au niveau de la vanne d'admission (50, 52, 54, 56, 58, 60, 62, 64) de l'autre cylindre supplémentaire (42, 44, 46, 48), les longueurs de flux d'air des conduites d'air d'admission (30, 32) permettant que l'onde de propagation arrive avec une phase appropriée au niveau de la vanne d'admission du second cylindre avec une pression minimale, une longueur de flux d'air très différente étant prévue pour les deux conduites d'air d'admission.

2. Agencement de conduite d'air selon la revendication 1, dans lequel au moins deux glissières (22, 24, 26, 28) bifurquent depuis les conduites d'air d'admission (30, 32) .

3. Agencement de conduite d'air selon la revendication 1 ou 2, dans lequel les glissières (26, 28) alimentant les vannes d'admission (54, 56, 58, 60) de deux cylindres adjacents (44, 46) bifurquent depuis la même conduite d'air (30, 32).

4. Agencement de conduite d'air selon l'une quelconque des revendications précédentes, dans lequel les glissières (22, 24) alimentant les vannes d'admission (50, 52, 62, 64) de deux cylindres (42, 48) séparés par au moins un autre cylindre (44, 46) bifurquent depuis la même conduite d'air (30, 32).

5. Agencement de conduite d'air selon l'une quelconque des revendications 3 ou 4, dans lequel deux glissières (26, 28) sont connectées directement en amont des vannes d'admission (54, 56, 58, 60).

6. Agencement de conduite d'air selon l'une quelconque des revendications précédentes, dans lequel les conduites d'air d'admission (30, 32) sont pourvues d'un diamètre uniforme sur leur longueur.

7. Agencement de conduite d'air selon l'une quelconque des revendications précédentes, dans lequel au moins un cylindre (42, 44, 46, 48) est pourvu de deux vannes d'admission (50, 52, 54, 56, 58, 60, 62, 64) qui sont alimentées par la même glissière (22, 24, 26, 28).

8. Agencement de conduite d'air selon l'une quelconque des revendications précédentes, dans lequel au moins une conduite d'air conjointe (34) est disposée entre la sortie (14) du refroidisseur (10) et les conduites d'air d'admission (30, 32).

9. Agencement de conduite d'air selon l'une quelconque des revendications précédentes, dans lequel les conduites d'air d'admission (30, 32) sont connectées via un élément de connexion en forme de T (36) au refroidisseur (10) .

10. Moteur à combustion interne (40) comprenant au moins :
- une pluralité de cylindres (42, 44, 46, 48),
- une chambre de combustion qui est disposée dans chaque cylindre (42, 44, 46, 48), un système d'admission d'air comprenant au moins un compresseur pour apporter de l'air de combustion, un agencement de conduite d'air (100) selon l'une quelconque des revendications précédentes.

11. Moteur à combustion interne selon la revendication 10, dans lequel au moins deux glissières (22, 24, 26, 28) bifurquent l'une des conduites d'air d'admission (30, 32) .

12. Moteur à combustion interne selon la revendication 10 ou 11, dans lequel les glissières (26, 28) alimentant les vannes d'admission (54, 56, 58, 60) de deux cylindres adjacents (44, 46) bifurquent depuis la même conduite d'air (30, 32).

13. Moteur à combustion interne selon l'une quelconque des revendications 10 à 12, dans lequel les glissières (22, 24) alimentant les vannes d'admission (50, 52, 62, 64) de deux cylindres (42, 48) séparés par au moins un autre cylindre (44, 46) bifurquent depuis la même conduite d'air (30, 32).
